# EUROPÄISCHE PATENTANMELDUNG

(11) **EP 1 118 770 A1**
(43) Veröffentlichungstag der Anmeldung: **25.07.2001**
(21) Anmeldenummer: 99811212.2
(22) Anmeldetag: 24.12.1999
(51) Int. Cl.: F04B 39/02, F04B 39/04, G01M 3/04

(54) **Kolbenkompressor**

(71) Anmelder: SULZER INNOTEC AG, CH-8401 Winterthur (CH)
(72) Erfinder: Die Erfindernennung liegt noch nicht vor
(74) Vertreter: Sulzer Management AG

(57) **Zusammenfassung**

Es wird ein Kolbenkompressor zum Verdichten eines Fluids vorgeschlagen, mit einem Kompressionsraum (6), in welchem ein Kolben (2) mittels einer Kolbenstange (3) hin- und herbewegbar angeordnet ist, mit einem benachbart zum Kompressionsraum (6) angeordneten Trennraum (7), durch welchen sich die Kolbenstange erstreckt, und mit einem Triebwerkraum (8), welcher benachbart zum Trennraum (7) angeordnet ist und einen Antrieb (4) umfasst, der mit der Kolbenstange (3) verbunden ist, um den Kolben (2) anzutreiben, wobei ein Öldetektor (10;20) vorgesehen ist, der so angeordnet und ausgestaltet ist, dass er im Trennraum (7) auf der Kolbenstange vorhandenes Öl detektieren kann.

## Beschreibung

Die Erfindung betrifft einen Kolbenkompressor zum Verdichten eines Fluids gemäss dem Oberbegriff des unabhängigen Anspruchs.

Kolbenkompressoren zum Verdichten von Fluiden, beispielsweise Gasen, haben üblicherweise einen Kompressionsraum, in welchem ein Kolben hin- und herbewegbar angeordnet ist, um das Fluid zu verdichten. Der Kolben wird mittels einer Kolbenstange bewegt, die ihrerseits mit einem Antrieb in einem Triebwerkraum des Kompressors verbunden ist. Zwischen dem Kompressionsraum und dem Triebwerkraum ist ein Trennraum vorgesehen, durch welchen hindurch sich die Kolbenstange frei, das heisst unberührt erstreckt. Zur Durchführung der Kolbenstange aus dem Kompressionsraum in den Trennraum ist eine Stopfbuchsenpackung vorgesehen, welche diese beiden Räume gegeneinander abdichtet. Zwischen dem Trennraum und dem Triebwerkraum ist ein Führungslager zum Führen der Kolbenstange vorgesehen, welches üblicherweise eine Führungsbuchse und Ölabstreifer umfasst. Der Antrieb ist üblicherweise mittels Öl geschmiert, wozu der Triebwerkraum bis zu einem gewissen Niveau mit Öl gefüllt ist. Die Lager werden durch interne oder externe Ölpumpen druckgeschmiert.

Für viele Anwendungen, z.B. bei ölfreien Labyrinth-Kolbenkompressoren, ist es von wesentlicher Bedeutung, dass kein Öl aus dem Triebwerkraum in den Kompressionsraum gelangen kann, denn dies würde beispielsweise zu erheblichen Verschmutzungen und gefährlichen Zuständen des verdichteten Fluids führen. Insbesondere bei der Verdichtung von brennbaren oder kritischen Fluiden, speziell bei der Verdichtung von Sauerstoff, stellt das Eindringen von Öl in den Kompressionsraum ein ganz erhebliches Gefahrenpotential und Sicherheitsrisiko dar, weil dies zu Bränden führen kann, die den gesamten Kompressor zerstören und zudem eine erhebliche Gefährdung für das Personal darstellen. Daher umfasst das Führungslager einen oder mehrere Ölabstreifringe, die verhindern sollen, dass Öl aus dem Triebwerkraum entlang der Kolbenstange in den Kompressionsraum gelangt bzw., dass Öl von der Kolbenstange in den Kompressionsraum transportiert wird. Zusätzlich ist in dem Bereich der Kolbenstange, der während des Betriebs innerhalb des Trennraums oszilliert, ein sogenannter Ölschirm vorgesehen, der bezüglich der Kolbenstange fixiert ist. Der Ölschirm soll verhindern, dass Öl, welches nicht von den Ölabstreifringen zurückgehalten wurde, in den Kompressionsraum gelangen kann. Aus Sicherheitsgründen muss der Kompressor dennoch in regelmässigen Abständen abgeschaltet werden, um dann per Auge oder durch manuelles Abtasten der Kolbenstange festzustellen, ob die Kolbenstange auf derjenigen Seite des Ölschirms, die mit dem Kolben verbunden ist, tatsächlich noch vollständig ölfrei ist. Dieses Vorgehen ist einerseits unwirtschaftlich, weil der Kompressor für eine solche Kontrolle jeweils abgeschaltet werden muss. Die Abschaltung ist z. B. bei Suerstoffkompressoren notwendig, weil der Raum, in welchem sich der Sauerstoffkompressor befindet, aus Sicherheitsgründen erst dann vom Personal betreten werden darf, wenn der Kompressor abgeschaltet und eventuell gespült worden ist. Andererseits besteht die nicht unerhebliche Gefahr, dass zwischen zwei solchen Kontrollen, beispielsweise durch Verschleiss, durch einen Schaden oder durch eine Leckage, Öl in den Kompressionsraum gelangen kann.

Ausgehend von diesem Stand der Technik ist es daher eine Aufgabe der Erfindung, einen Kolbenkompressor mit einer erhöhten Betriebssicherheit, vorzuschlagen, bei welchem das Risiko eines Eindringes von Öl in den Kompressionsraum minimiert wird.

Der diese Aufgabe lösende Kolbenkompressor zum Verdichten eines Fluids ist durch die Merkmale des unabhängigen Vorrichtungsanspruchs gekennzeichnet.

Es wird also ein Kolbenkompressor zum Verdichten eines Fluids vorgeschlagen, mit einem Kompressionsraum, in welchem ein Kolben mittels einer Kolbenstange hin- und herbewegbar angeordnet ist, mit einem benachbart zum Kompressionsraum angeordneten Trennraum, durch welchen sich die Kolbenstange erstreckt, und mit einem Triebwerkraum, welcher benachbart zum Trennraum angeordnet ist und einen Antrieb umfasst, der mit der Kolbenstange verbunden ist, um den Kolben anzutreiben, wobei ein Öldetektor vorgesehen ist, der so angeordnet und ausgestaltet ist, dass er im Trennraum auf der Kolbenstange vorhandenes Öl detektieren kann.

Durch die Massnahme, einen Öldetektor vorzusehen, der während des Betriebs des Kompressors ständig und automatisch die Kolbenstange im Trennraum daraufhin untersucht, ob Öl auf der Kolbenstange vorhanden ist, wird die Betriebssicherheit des Kolbenkompressors deutlich erhöht. Sobald der Öldetektor Öl auf der Kolbenstange detektiert, kann der Kompressor sofort abgeschaltet werden, sodass praktisch kein Risiko mehr besteht, dass Öl in den Kompressionsraum vordringen kann. Zudem ist es nicht mehr notwendig, den Kompressor zur Kontrolle der Kolbenstange auf vorhandenes Öl abzuschalten; diese Kontrolle erfolgt automatisch und ständig während des Betriebs des Kompressors. Dies ist auch unter wirtschaftlichen Aspekten ein erheblicher Vorteil.

Gemäss einer ersten bevorzugten Ausführungsform ist der Öldetektor ein optischer Detektor mit einer Lichtquelle zum Aussenden von Anregungslicht, welches die Kolbenstange im Trennraum beaufschlagt, sowie mit einem Sensor zum Detektieren eines Messlichts, welches von der Kolbenstange kommt. Vorzugsweise wird dabei die Tatsache ausgenutzt, dass die üblicherweise in Kolbenkompressoren verwendeten Mineralöle aufgrund ihrer Hydrocarbon-Moleküle fluoreszierende Eigenschaften haben. Um diesen Effekt für die Detektion von Öl auszunutzen, weist das Anregungslicht einen ersten Wellenlängenbereich auf, der im Ultraviolettbereich (UV-Bereich) liegt, und der Sensor ist in einem zweiten Wellenlängenbereich sensitiv, der im sichtbaren Spektralbereich liegt, wobei der erste und der zweite Wellenlängenbereich nicht überlappen. Durch Absorption der ultravioletten Spektralkomponenten des Anregungslichts wird dann auf der Kolbenstange gegebenenfalls vorhandenes Öl zur Fluoreszenz angeregt und emittiert Licht im sichtbaren Spektralbereich, welches von dem Sensor erfasst wird.

Vorzugsweise ist der Öldetektor so ausgestaltet, dass das Anregungslicht die Kolbenstange in einem Bereich beaufschlagt, der sich über den gesamten äusseren Umfang der Kolbenstange erstreckt, und dass der Öldetektor das Messlicht aus diesem Bereich empfängt. Dadurch ist sichergestellt, dass auch sehr kleine Ölflecken, die sich nicht über den gesamten Umfang der Kolbenstange erstrecken, von dem Öldetektor sicher detektiert werden.

Um den gesamten äusseren Umfang der Kolbenstange zu erfassen, kann der Öldetektor einen Lichtleiter umfassen, der sich um die Kolbenstange herum erstreckt. Gemäss einer anderen Variante umfasst der Öldetektor mehrere Lichtquellen, die so angeordnet sind, dass die Lichtquellen die Kolbenstange in einem Bereich mit Anregungslicht beaufschlagen, der sich über den gesamten äusseren Umfang der Kolbenstange erstreckt. Dann umfasst der Öldetektor vorzugsweise auch mehrere Sensoren, die so angeordnet sind, dass sie das Messlicht aus einem Bereich erfassen, der sich über den gesamten äusseren Umfang der Kolbenstange erstreckt.

Gemäss einer anderen bevorzugten Ausführungsform der Erfindung ist der Öldetektor ein elektrischer Detektor, der einen bezüglich der Kolbenstange fixierten Schwingkreis umfasst, sowie eine bezüglich des Trennraums fixierte Sende/Empfangsvorrichtung, welche den Schwingkreis angeregt und das von dem Schwingkreis kommende Signal empfängt. Sobald Öl in den auf der Kolbenstange fixierten Schwingkreis eindringt, ändert sich dessen Kapazität, was von der Sende/Empfangsvorrichtung detektiert wird.

Durch die Erfindung wird ferner die Verwendung eines Öldetektors in einem Kolbenkompressor zum automatischen Detektieren von Öl auf der Kolbenstange vorgeschlagen.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen, nicht massstäblichen Zeichnung zeigen:
- Fig. 1:: Eine schematische Schnittdarstellung eines Ausführungsbeispiels eines erfindungsgemässen Kolbenkompressors,
- Fig. 2:: eine schematische Darstellung zur Veranschaulichung eines ersten Ausführungsbeispiels eines Öldetektors,
- Fig. 3:: ein Diagramm zur Veranschaulichung der Wellenlängenbereiche von Anregungs- und Messlicht,
- Fig. 4:: eine Aufsicht auf das erste Ausführungsbeispiel des Öldetektors,
- Fig. 5:: eine Aufsicht auf eine Variante des Öldetektors, und
- Fig. 6:: eine schematische Darstellung eines zweiten Ausführungsbeispiels des Öldetektors.

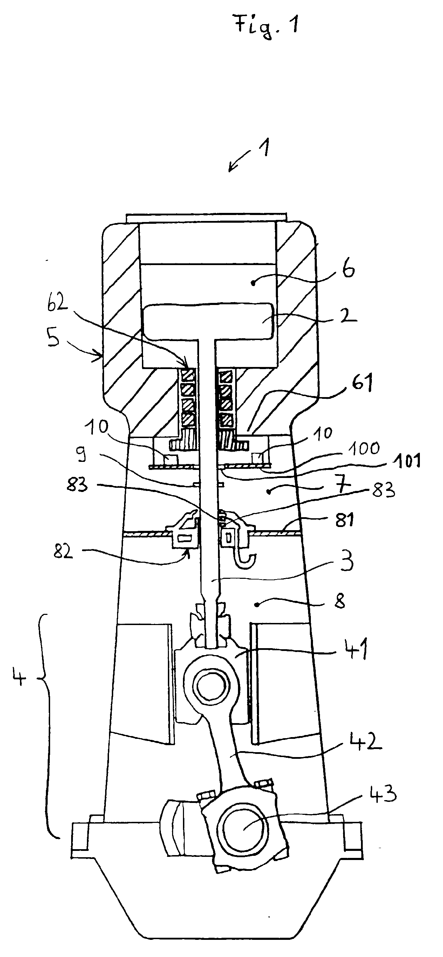

Fig. 1 zeigt in einer schematschen Schnittdarstellung ein Ausführungsbeispiel eines Kolbenkompressors zum Verdichten eines Fluids, insbesondere eines Gases, der gesamthaft mit dem Bezugszeichen 1 bezeichnet ist. Der Kolbenkompressor 1 ist als doppelwirkender Kompressor mit Kreuzkopfantrieb ausgestaltet und dient der Verdichtung von Sauerstoff.

Der Kompressor 1 hat ein Gehäuse 5, in welchem ein Kompressionsraum 6, ein Trennraum 7, der auch als Distanzstück bezeichnet wird, und ein Triebwerkraum 8 mit einem Antrieb 4 vorgesehen sind, wobei der Trennraum 7 zwischen dem Kompressionsraum 6 einerseits und dem Triebwerkraum 8 andererseits angeordnet ist. Der Kompressionsraum 6 ist durch einen Boden 61 gegenüber dem Trennraum 7 abgedichtet. Der Triebwerkraum 8 ist durch eine ihn begrenzende Wand 81 vom Trennraum 7 abgegrenzt.

Im Kompressionsraum 6 ist ein Kolben 2 hin- und herbewegbar angeordnet, der bei seiner Hubbewegung das zu verdichtende Fluid, hier also beispielsweise Sauerstoff, komprimiert. Der Kolben 2 ist hier als Labyrinth-Kolben ausgestaltet, das heisst die Dichtung zwischen der äusseren Umfangsfläche des Kolbens 2 und der ihr gegenüberliegenden Wandung des Kompressionsraums 6 ist nach dem Prinzip einer Labyrinth-Dichtung ausgestaltet. Der Kompressor 1 ist in dem hier beschriebenen Ausführungsbeispiel doppelwirkend ausgestaltet, das heisst, bei der darstellungsgemässen Aufwärtsbewegung komprimiert der Kolben 2 den Sauerstoff im Raum oberhalb des Kolbens 2 und bei seiner darstellungsgemässen Abwärtsbewegung wird der Sauerstoff im Raum unterhalb des Kolbens 2 komprimiert. Die in an sich bekannter Weise vorgesehenen Saug- und Druckventile zum Ansaugen des Fluids in den Kompressionsraum 6 bzw. zum Auslassen des komprimierten Fluids aus dem Kompressionsraum 6 sind in Fig. 1 nicht dargestellt.

Der Kolben 2 ist mit einer Kolbenstange 3 verbunden, die sich vom Kolben ausgehend durch den Trennraum 7 hindurch in den Triebwerkraum 8 erstreckt und dort mit dem Antrieb 4 verbunden ist, um den Kolben 2 anzutreiben. Der Antrieb 4 umfasst einen Kreuzkopf 41, eine Schubstange 42 und eine Kurbelwelle 43, die von einem nicht dargestellten Motor angetrieben wird. Die Kolbenstange 2 ist mit dem Kreuzkopf 41 verbunden, der andererseits über die Schubstange 42 mit der Kurbelwelle 43 verbunden ist, sodass die Drehbewegung der Kurbelwelle 43 in eine im wesentlichen lineare Oszillationsbewegung der Kolbenstange 3 und damit des Kolbens 2 umgesetzt wird. Der Antrieb 4 ist mit Öl geschmiert, beispielsweise ist der Triebwerkraum 8 bis zu einem Niveau unterhalb der Kurbelwelle 43 mit Öl gefüllt.

Zur Durchführung der Kolbenstange 3 aus dem Kompressionsraum 6 in den Trennraum 7 ist im Boden 61 eine Stopfbuchsenpackung 62 vorgesehen, die vorzugsweise nach dem Prinzip einer Labyrinth- oder Spaltringdichtung ausgestaltet ist. Die Stopfbuchsenpackung 62 dient zum einen der Abdichtung des Kompressionsraums 6 und zum anderen der Führung der Kolbenstange 3. Im Trennraum 7 ist die Kobenstange 2 frei, das heisst ungeführt.

Zur Durchführung der Kolbenstange 3 aus dem Trennraum 7 in den Triebwerkraum 8 und zu ihrer Führung ist in der Wand 81 ein Führungslager 82 mit einer Führungsbuchse vorgesehen. Das Führungslager 82 umfasst mehrere Ölabstreifringe 83 oder sonstige Ölabstreifer, welche das Öl von der Kolbenstange 3 abstreifen.

Ferner ist ein Ölschirm 9 fest auf der Kolbenstange 3 montiert. Dieser ist so auf der Kolbenstange 3 platziert, dass er sich während der Hubbewegung des Kolbens 2 im Trennraum 7, also im Bereich zwischen dem Boden 61 und der Wand 81 hin- und herbewegt. Die Aufgabe des Ölschirms 9 ist es zu verhindern, dass Öl, welches sich noch auf der Kolbenstange 3 befindet, weil es beispielsweise nicht von den Ölabstreifringen 83 abgestreift wurde, weiter entlang der Kolbenstange 3 in Richtung Kompressionsraum 6 aufsteigt. Sobald sich auf der dem Kompressionsraum 6 zugewandten Seite des Ölschirms 9, also darstellungsgemäss oberhalb des Ölschirms 9, Öl auf der Kolbenstange befindet, muss der Kompressor 1 aus Sicherheitsgründen abgeschaltet werden.

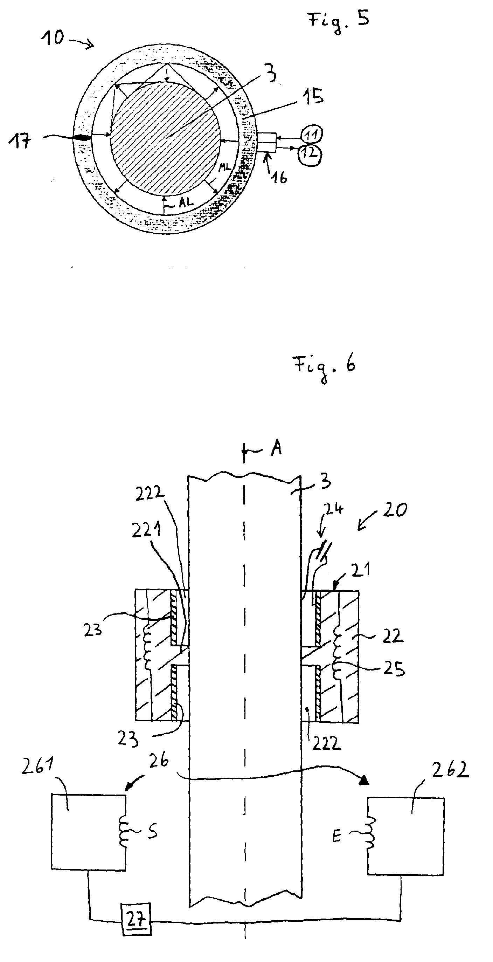

Um diesbezüglich eine ständige und automatische Kontrolle durchzuführen, ist bei dem erfindungsgemässen Kolbenkompressor 1 ein Öldetektor 10 vorgesehen, der so angeordnet und ausgestaltet ist, dass er im Trennraum 7 auf der Kolbenstange 3 vorhandenes Öl detektiern kann. Bei dem in Fig. 1 dargestellten Kolbenkompressor 1 ist der Öldetektor 10 auf einer Plattform 100 vorgesehen, die im Trennraum 7 des Kolbenkompressors 1 unmittelbar benachbart zum Kompressionsraum 6 vorgesehen ist. Vorzugsweise ist die Plattform 100 fest an der dem Trennraum 7 zugewandten Seite des Bodens 61 montiert und weist eine zentrale Öffnung 101 auf (siehe auch Fig. 4), durch welche sich die Kolbenstange 3 erstreckt.

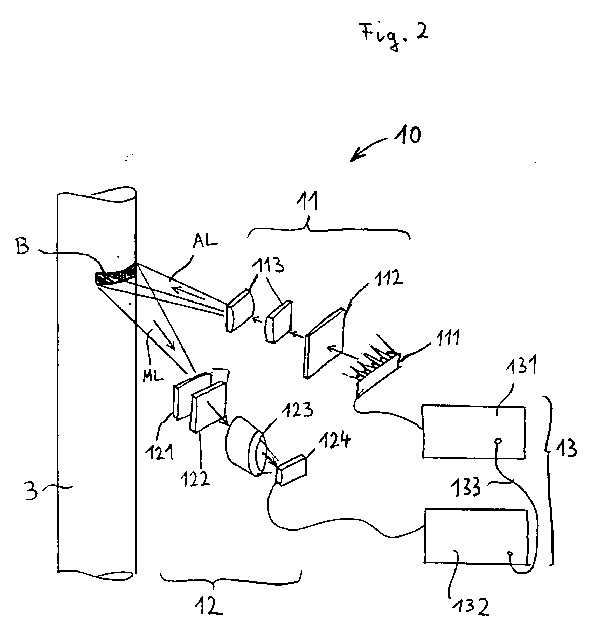

Gemäss einem ersten bevorzugten Ausführungsbeispiel des Öldetektors 10 ist dieser als optischer Detektor ausgestaltet. Fig. 2 veranschaulicht in einer schematischen Darstellung den prinzipiellen Aufbau und die Funktionsweise des ersten Ausführungsbeispiels des Öldetektors 10. Bei diesem wird die Tatsache ausgenutzt, dass die üblicherweise in Kolbenkompressoren verwendeten Mineralöle aufgrund ihrer Hydrocarbon-Moleküle fluoreszierende Eigenschaften haben. Werden diese Moleküle mit Ultraviolett (UV-) Licht angeregt, so emittieren sie Licht im sichtbaren Wellenlängenbereich des Spektrums. Natürlich ist es prinzipiell auch möglich, dem im Kompressor 1 verwendeten Öl Fluoreszenzfarbstoffe beizumischen.

Der Öldetektor 10 (siehe Fig. 2) umfasst eine Lichtquelle 11 zum Aussenden eines Anregungslichts AL, einen Sensor 12 zum Detektieren eines Messlichts ML , welches von der Kolbenstange 3 kommt, sowie eine Versorgungs- und Auswertevorrichtung 13 für die Lichtquelle 11 und den Sensor 12.

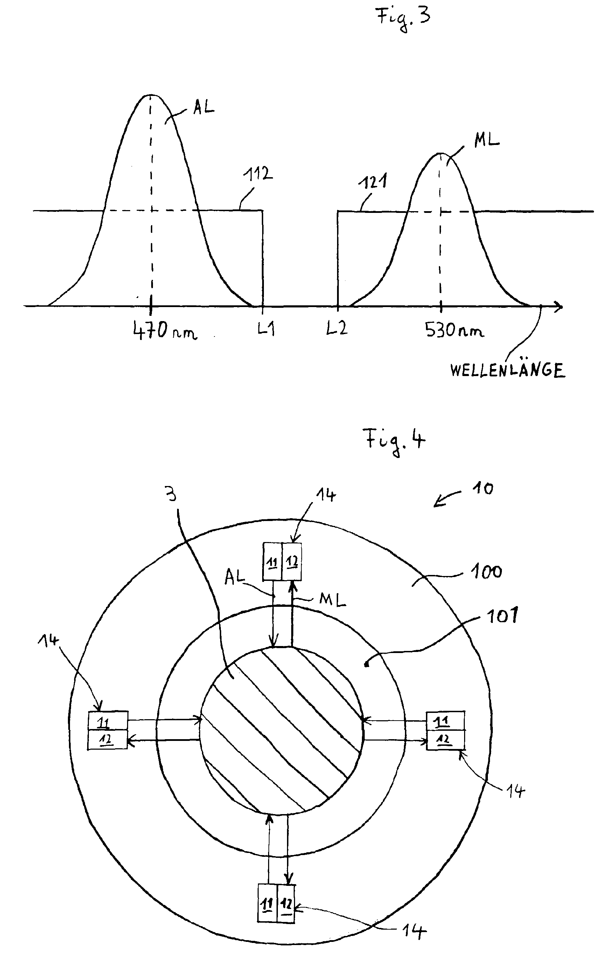

Die Lichtquelle 11 umfasst ein Leuchtmittel 111, welches ein Licht emittiert, das einen ersten Wellenlängenbereich umfasst, der im UV-Bereich des Spektrums liegt. Als Leuchtmittel 111 eignen sich beispielsweise breitbandige Leuchtdioden (LED) 111, deren Emissionsmaximum bei einer Wellenlänge von etwa 470 nm liegt. Es sind aber auch andere Leuchtmittel, beispielsweise Laser oder Laserdioden geeignet. Die Lichtquelle 11 umfasst ferner ein Tiefpass-Blaufilter 112, beispielsweise ein Interferenzfilter, sowie Fokussierlinsen 113. Die Bezeichnung "Tiefpass" bezieht sich auf die Wellenlänge, das heisst das Tiefpass-Blaufilter lässt nur solches Licht durch, dessen Wellenlänge kleiner ist als eine Grenzwellenlänge L1 (siehe Fig. 3). Die Fokussierlinsen 113 dienen dazu, das Anregungslicht AL auf die Kolbenstange 3 zu fokussieren, sodass nur ein schmaler, im wesentlichen linienförmiger Bereich B der Kolbenstange 3 mit dem Anregungslicht AL beaufschlagt wird.

Der Sensor 12 umfasst ein Hochpass-Grünfilter 121, beispielsweise ein Interferenzfilter, ein scharfes Farbfilter 122, ein Objektiv 123 sowie ein photoelektrisches Element, beispielsweise eine Photodiode 124. Das aus dem vom Anregungslicht AL beaufschlagten Bereich B kommende Messlicht ML wird zunächst von dem Hochpass-Grünfilter 121 gefiltert, wobei nur solches Licht durchgelassen wird, dessen Wellenlänge grösser ist als eine Grenzwellenlänge L2 (siehe Fig. 3). Im nachgeschalteten scharfen Farbfilter 122 werden eventuell noch im Messlicht ML vorhandene Spektralkomponenten, die im Bereich des blauen Lichts liegen, herausgefiltert. Natürlich sind auch solche Ausgestaltungen des Sensors 12 möglich, bei denen anstelle der beiden Filter 121, 122 nur ein Filter vorgesehen ist.

Nach der Filterung bildet dann das Objektiv 123 den linienförmigen Bereich B bzw. das von diesem kommende Messlicht ML auf die Fotodiode 124 ab. Das Objektiv umfasst dazu beispielsweise eine Linse oder eine Anordnung mehrerer Linsen, insbesondere Fokussierlinsen. Durch die beiden Filter 121 und 122 ist es gewährleistet, das der Sensor 12 nur in einem zweiten Wellenlängenbereich sensitiv ist, der sich nicht mit dem ersten Wellenlängenbereich überlappt. Dies ist in dem schematischen Diagramm in Fig. 3 nochmals verdeutlicht. Somit ist sichergestellt, dass der Sensor 12 nicht auf lediglich reflektiertes Anregungslicht reagiert.

Die Versorgungs- und Auswertevorrichtung 13 umfasst einen Generator 131 sowie eine Auswerteeinheit 132 mit einem Verstärker zum Verstärken des von der Fotodiode 124 empfangenen Signals. Der Generator 131 versorgt die Leuchtdioden 111 mit Energie und steuert diese an. Vorzugsweise werden die Leuchtdioden 111 pulsierend mit einer Frequenz von beispielsweise 180 Hz betrieben. Zudem ist der Verstärker in der Auswerteeinheit 132 als Lockln-Verstärker ausgestaltet, der über eine Signalleitung 133 zum Synchronisieren mit dem Generator 131 verbunden ist. Durch diese Massnahmen lassen sich Einflüsse des Umgebungslichts wirkungsvoll unterbinden.

Während des Betriebs des Kolbenkompressors 1 wird mittels der Lichtquelle 11 der linienförmige Bereich B auf der Kolbenstange 3 mit pulsierendem UV-Licht als Anregungslicht beaufschlagt. Solange sich kein Öl auf dem Teil der Kolbenstange 3 befindet, der während der Bewegung der Kolbenstange 3 von dem Anregungslicht AL beaufschlagt wird, detektiert der Sensor 12 auch kein Fluoreszenzlicht. Der Teil der Kolbenstange 3, der während des Betriebs des Kompressors 1 vom Anregungslicht AL abgetastet wird, umfasst mindestens den gemäss der Darstellung in Fig. 1 oberhalb des Ölschirms 9 befindlichen Teil der Kolbenstange 3, also den kritischen Bereich, in welchem die Kolbenstange für einen sicheren Betrieb des Kompressors 1 von Öl frei sein muss. Sobald nun Öl auf diesen Teil der Kolbenstange 3 vordringt, so gerät es während der Hubbewegung der Kolbenstange 3 in das Anregungslicht AV und wird von diesem zur Fluoreszenz angeregt. Das Fluoreszenzlicht wird von dem Sensor 12 detektiert, womit die Ölpräsenz nachgewiesen ist. In diesem Falle kann eine Warnung erfolgen oder der Kompressor 1 automatisch abgeschaltet werden.

Vorzugsweise ist der Öldetektor 10 so ausgestaltet, dass sich der Bereich B der vom Anregungslicht AV beaufschlagt wird, über den gesamten äusseren Umfang der Kolbenstange 3 erstreckt, und dass der Öldetektor das Messlicht aus diesem Bereich B empfängt. Eine mögliche Realisierung dieser Ausgestaltung ist in Fig. 4 dargestellt, die eine Aufsicht auf die Plattform 100 aus Richtung des Kompressionsraums 6 zeigt. Die Plattform 100 ist als ringförmige Scheibe mit der zentralen Öffnung 101 ausgestaltet, welche die Kolbenstange 3 vollumfänglich umgibt. Der Öldetektor 10 umfasst mehrere (hier vier) Lichtquellen 11 und mehrere (hier vier) Sensoren 12, wobei jeweils eine Lichtquelle 11 und ein Sensor 12 in einem Prüfkopf 14 integriert sind. Alle Prüfköpfe 14 und somit alle Lichtquellen 11 und alle Sensoren 12 sind auf der Plattform 100 angeordnet und um den Umfang der Kolbenstange 3 herum verteilt. Benachbarte Prüfköpfe 14 sind jeweils um etwa 90° bezüglich der Umfangsrichtung der Kolbenstange 3 versetzt. Alle Prüfköpfe 14 können an eine gemeinsame, in Fig. 4 nicht dargestellten Versorgungs- und Auswertevorrichtung 13 (siehe Fig. 2) angeschlossen sein, in sinngemäss gleicher Weise wie dies im Zusammenhang mit Fig. 2 erläutert wurde. Die vier Lichtquellen 11, von denen jede wie in Fig. 2 gezeigt ausgestaltet sein kann, beaufschlagen gemeinsam einen im wesentlichen linienförmigen Bereich mit UV-Licht, der sich über den gesamten Umfang der Kolbenstange 3 erstreckt. Die vier Sensoren 12, von denen jeder wie in Fig. 2 ausgestaltet sein kann, erfassen das Messlicht MV aus dem gesamten Bereich, der mit Anregungslicht AL beaufschlagt wird, und der sich über den gesamten äusseren Umfang der Kolbenstange 3 erstreckt. Folglich wird die Kolbenstange 3 entlang ihres gesamten äusseren Umfangs daraufhin überwacht, ob Öl vorhanden ist. Somit ist sichergestellt, dass auch kleinere Ölflecken, die sich nicht über den gesamten Umfang der Kolbenstange 3 erstrecken von dem Öldetektor 10 sicher erfasst und erkannt werden.

Der Durchmesser der zentralen Öffnung 101 ist vorzugsweise so bemessen, dass der Ölschirm 9 - falls ein solcher vorhanden ist - durch die zentrale Öffnung 101 hindurchpasst.

Natürlich ist es auch möglich, mehr oder weniger als vier Lichtquellen 11 und/oder Sensoren 12 vorzusehen. In der Praxis hat es sich bewährt, wenn - wie hier beschrieben - vier Lichtquellen 11 vorgesehen sind oder nur drei Lichtquellen 11, von denen jede jeweils ein Drittel einer Umfangslinie der Kolbenstange 3 mit Anregungslicht AL beaufschlagt. Auch ist es möglich, die Lichtquellen 11 und die Sensoren 12 als separate, einzelne Bauteile räumlich voneinander zu trennen. Ferner kann die Anzahl der Lichtquellen 11 verschieden sein von der Anzahl der Sensoren 12.

Fig. 5 zeigt eine Variante für das erste Ausführungsbeispiel des Öldetektors 10, die auf dem gleichen Messprinzip, nämlich der Anregung und der Detektion von Fluoreszenz beruht. Bei dieser Variante ist ein Lichtleiter 15 vorgesehen, welcher die Kolbenstange umgibt, sich also um den gesamten Umfang der Kolbenstange 3 herum erstreckt. Dieser Lichtleiter 15 ist über Verbindungsmittel 16 optisch an die Lichtquelle 11 und an den Sensor 12 gekoppelt. Die Verbindungsmittel 16 können beispielsweise zwei weitere separate Lichtleiter sein, von denen jeweils ein Ende mit dem Lichtleiter 15 optisch leitend verbunden ist. Das andere Ende des ersten als Verbindungsmittel dienenden Lichtleiters ist mit der Lichtquelle 11 verbunden und das andere Ende des zweiten als Verbindungsmittel dienenden Lichtleiters mit dem Sensor 12.

Aus Gründen einer einfachen Montage kann es vorteilhaft sein, den Lichtleiter 15 aus zwei Stücken zusammenzusetzen, die über eine optische Kupplung 17 miteinander verbunden sind. Es kann aber auch ein einstückiger Lichtleiter 15 verwendet werden, der um die Kolbenstange 3 herumgeführt wird. Das eine Ende dieses Lichtleiters wird dann mit der Lichtquelle 11 optisch verbunden und das andere Ende mit dem Sensor 12. Eine weitere Möglichkeit besteht darin, anstelle des einen Lichtleiters 15 zwei separate Lichtleiter vorzusehen, die beide die Kolbenstange 3 umschliessen. Der eine Lichtleiter ist zur Leitung des Anregungslichts mit der Lichtquelle 11 verbunden, und der andere Lichtleiter ist zur Leitung des Messlichts mit dem Sensor 12 verbunden.

Bezüglich der Ausgestaltung der Lichtquelle 11 und des Sensors 12 sowie der Funktion dieser Variante gelten die vornestehenden Erläuterungen in sinngemäss gleicher Weise. Insbesondere ist es auch bei dieser Variante gewährleistet, dass die Kolbenstange 3 entlang ihres gesamten äusseren Umfangs auf das Vorhandensein von Öl überwacht wird.

Fig. 6 zeigt ein zweites Ausführungsbeispiel eines Öldetektors 20, bei welchem der Öldetektor 20 als elektrischer Detektor ausgestaltet ist. Der Öldetektor 20 umfasst einen Schwingkreis 21, der bezüglich der Kolbenstange 3 fixiert ist, und eine Sende/Empfangsvorrichtung 26, die bezüglich des Trennraums 7 (Fig. 1) fixiert ist. Die Sende/Empfangsvorrichtung 26 ist vorzugsweise auf der in Fig. 1 gezeigten Plattform 100 montiert, welche an der dem Trennraum 7 zugewandten Seite des Bodens 61 befestigt ist. Der Schwingkreis 21 kann beispielsweise anstelle des Ölschirms 9 an der gleichen Stelle auf der Kolbenstange 3 befestigt sein, oder gemäss der Darstellung in Fig. 1 unmittelbar oberhalb des Ölschirms 9, oder der Schwingkreis 21 kann in den Ölschirm 9 integriert sein.

Bei dem in Fig. 6 gezeigten Ausführungsbeispiel umfasst der Schwingkreis 21 einen im wesentlichen ringförmigen Trägerkörper 22, der ortsfest auf der Kolbenstange 3 angeordnet ist und dieses umschliesst. Der Trägerkörper 22 umfasst einen bezüglich der axialen Richtung, womit die Richtung der Längsachse A der Kolbenstange 3 gemeint ist, mittleren Bereich 221, welcher die Kolbenstange 3 kontaktiert. Auf beiden Seiten dieses mittleren Bereichs 221 ist jeweils eine nutförmige Ausnehmung 222 vorgesehen, die sich jeweils über den gesamten inneren Umfang des Trägerkörpers 22 erstreckt. Die parallel zur Längsachse A verlaufende Begrenzungsfläche jeder Ausnehmung 222 ist jeweils mit einem elektrisch leitfähigen Material, vorzugsweise einer Kupferfolie 23 bedeckt. Diese Kupferfolie 23 bildet mit der ihr gegenüberliegenden Aussenfläche der Kolbenstange 3 einen Kondensator 24, der in Fig. 6 symbolisch angedeutet ist. Der Trägerkörper 22 umfasst ferner eine Induktivität 25, die gemeinsam mit dem Kondensator 24 einen elektrischen Schwingkreis bildet.

Die Sende/Empfangsvorrichtung 26 umfasst einen Sender 261 mit einer Sendespule S und einen Empfänger 262 mit einer Empfangsspule E. Die Sende/Empfangsvorrichtung 26 umfasst ferner eine Ansteuer- und Auswerteeinheit 27, die sowohl mit dem Sender 261 als auch mit dem Empfänger 262 verbunden ist. Mittels der Sendespule S wird ein Hochfrequenzsignal von beispielsweise 4 MHz ausgestrahlt, welches des Schwingkreis 21 anregt, wenn dieser sich an dem Sender 261 vorbei bewegt. Aufgrund der Anregung emittiert der Schwingkreis 21 seinerseits ein Hochfrequenzsignal, welches von dem Empfänger 262 empfangen wird. Dieses empfangene Signal wird in der Ansteuer- und Auswerteeinheit 27 mit dem vom Sender 261 ausgestrahlten Signal hinsichtlich Phase und/oder Frequenz verglichen. Befindet sich nun Öl auf der Kolbenstange 3, so dringt dieses in die Ausnehmung 222 ein und verändert dadurch die Kapazität des Kondensators 24. Diese Kapazitätsänderung beeinflusst das Schwingungsverhalten des Schwingkreises 21 und führt somit zu einer Änderung des vom Empfänger 262 empfangenen Signals, beispielsweise zu einer Phasen- und/oder Frequenzverschiebung. Diese Änderung und damit die Präsenz von Öl auf der Kolbenstange 3, wird von der Ansteuer- und Auswerteeinheit 27 detektiert. Auch bei diesem zweiten Ausführungsbeispiel erfasst der Öldetektor 20 die Kolbenstange 3 entlang ihres gesamten äusseren Umfangs, sodass auch hier minimale oder lokale Ölflecken bzw. Ölspuren detektiert werden, die sich nicht über den gesamten Umfang der Kolbenstange 3 erstrecken,.

Natürlich ist es auch möglich, den Sender 261 und den Empfänger 262 in eine bauliche Einheit zu integrieren. Auch sind solche Ausgestaltungen möglich, bei denen die Sendespule S und die Empfangsspule E identisch sind. Dann wird beispielsweise mittels dieser einen Spule ein Hochfrequenzimpuls ausgestrahlt und das Antwortsignal des Schwingkreises 21 mit derselben Spule empfangen.

Natürlich sind auch noch andere optische, elektrische oder sonstige Ausführungsformen des Öldetektors 10;20 in dem erfindungsgemässen Kolbenkompressor 1 möglich, mit denen das Vorhandensein von Öl auf der Kolbenstange 3 detektierbar ist.

Bei dem erfindungsgemässen Kolbenkompressor 1 ist es also möglich, die Kolbenstange 3, insbesondere in ihren Bereichen, die während der Hubbewegung in den Kompressionsraum 6 gelangen, während des Betriebs ständig und vollkommen automatisch auf Ölpräsenz zu untersuchen. Dies ermöglicht einen wesentlich effizienteren und wirtschaftlicheren Betrieb des Kolbenkompressors 1, weil es nicht mehr notwendig ist, den Kolbenkompressor 1 in regelmässigen Abständen abzuschalten, um den Zutritt zum Kompressor zu ermöglichen, damit die Kolbenstange 3 auf Ölspuren kontrolliert werden kann. Ferner bringt der Öldetektor 10;20 eine erhebliche Steigerung der Betriebssicherheit mit sich, weil die Kolbenstange 3 während des Betriebs ständig auf Ölspuren untersucht wird und somit ein unbemerktes Eindringen von Öl in den Kompressionsraum 6 ausgeschlossen wird. Dies ist insbesondere bei kritischen Anwendungen wie der Verdichtung von Sauerstoff ein grosser Vorteil.

Vorzugsweise ist bei dem erfindungsgemässen Kolbenkompressor 1 eine Notabschaltung vorgesehen, welche den Kompressor automatisch abschaltet und/oder die Zuführung des zu komprimierenden Fluids in den Kompressionsraum automatisch unterbindet, sobald der Öldetektor 10;20 ÖI im kritischen Bereich auf der Kolbenstange 3 detektiert.

Natürlich ist die Erfindung nicht auf den vorne beschriebenen doppelwirkenden Kompressor beschränkt, sondern sie eignet sich auch für alle anderen Arten von Kolbenkompressoren, insbesondere auch für einfachwirkende.

## Patentansprüche

1. Kolbenkompressor zum Verdichten eines Fluids, mit einem Kompressionsraum (6), in welchem ein Kolben (2) mittels einer Kolbenstange (3) hin- und herbewegbar angeordnet ist, mit einem benachbart zum Kompressionsraum (6) angeordneten Trennraum (7), durch welchen sich die Kolbenstange erstreckt, und mit einem Triebwerkraum (8), welcher benachbart zum Trennraum (7) angeordnet ist und einen Antrieb (4) umfasst, der mit der Kolbenstange (3) verbunden ist, um den Kolben (2) anzutreiben, dadurch gekennzeichnet, dass ein Öldetektor (10;20) vorgesehen ist, der so angeordnet und ausgestaltet ist, dass er im Trennraum (7) auf der Kolbenstange vorhandenes Öl detektieren kann.

2. Kolbenkompressor nach Anspruch 1, wobei der Öldetektor (10) ein optischer Detektor ist mit einer Lichtquelle (11) zum Aussenden von Anregungslicht (AL), welches die Kolbenstange (3) im Trennraum (7) beaufschlagt, sowie mit einem Sensor (12) zum Detektieren eines Messlichts (ML), welches von der Kolbenstange (3) kommt.

3. Kolbenkompressor nach Anspruch 2, bei welchem der Öldetektor (10) so ausgestaltet ist, dass das Anregungslicht (AL) die Kolbenstange (3) in einem Bereich beaufschlagt, der sich über den gesamten äusseren Umfang der Kolbenstange (3) erstreckt, und dass der Öldetektor (10) das Messlicht (ML) aus diesem Bereich empfängt.

4. Kolbenkompressor nach Anspruch 2, bei welchem das Anregungslicht (AL) einen ersten Wellenlängenbereich aufweist, der im Ultraviolettbereich liegt, und bei welchem der Sensor (12) in einem zweiten Wellenlängenbereich sensitiv ist, der im sichtbaren Spektralbereich liegt, wobei der erste und der zweite Wellenlängenbereich nicht überlappen.

5. Kolbenkompressor nach einem der Ansprüche 2-4, bei welchem der Öldetektor (10) mehrere Lichtquellen (11) umfasst, die so angeordnet sind, dass die Lichtquellen (11) die Kolbenstange (3) in einem Bereich mit Anregungslicht (AL) beaufschlagen, der sich über den gesamten äusseren Umfang der Kolbenstange (3) erstreckt.

6. Kolbenkompressor nach einem der Ansprüche 2-5, bei welchem der Öldetektor (10) mehrere Sensoren (12) umfasst, die so angeordnet sind, dass sie das Messlicht (ML) aus einem Bereich erfassen, der sich über den gesamten äusseren Umfang der Kolbenstange (3) erstreckt.

7. Kolbenkompressor nach einem der Ansprüche 2-6, bei welchem jede Lichtquelle (11) und jeder Sensor (12) auf einer Plattform (100) angeordnet sind, die im Trennraum (7) des Kolbenkompressors (1) unmittelbar benachbart zum Kompressionsraum (6) vorgesehen ist.

8. Kolbenkompressor nach Anspruch 7, wobei die Plattform (100) eine zentrale Öffnung (101) aufweist, durch welche sich die Kolbenstange (3) erstreckt.

9. Kolbenkompressor nach Anspruch 1, wobei der Öldetektor (20) ein elektrischer Detektor ist, der einen bezüglich der Kolbenstange (3) fixierten Schwingkreis (21) umfasst, sowie eine bezüglich des Trennraums (7) fixierte Sende/Empfangsvorrichtung (26), welche den Schwingkreis (21) angeregt und das von dem Schwingkreis (21) gesendete Signal empfängt.

10. Verwendung eines Öldetektors (10;20) in einem Kolbenkompressor (1) zum automatischen Detektieren von Öl auf der Kolbenstange (3).
